# EUROPÄISCHE PATENTSCHRIFT

(11) **EP 3 626 593 B1**
(45) Veröffentlichungstag und Bekanntmachung des Hinweises auf die Patenterteilung: **15.03.2023**
(21) Anmeldenummer: 18196081.6
(22) Anmeldetag: 21.09.2018
(51) Int. Cl.: B62K 19/34, B62M 3/00, B62M 6/55, B62M 6/50, B62J 45/411

(54) **KOMPAKTE TRETLAGERANORDNUNG MIT DREHMOMENT-MESSHÜLSE**
COMPACT BOTTOM BRACKET ASSEMBLY WITH TORQUE MEASURING SLEEVE
PALIER DE PÉDALIER COMPACT À MANCHE DE MESURE DE COUPLE

(43) Veröffentlichungstag der Anmeldung: 25.03.2020
(73) Patentinhaber: maxon international ag, 6072 Sachseln (CH)
(72) Erfinder: von Lehmann, Ernst, 79279 Vörstetten (DE)
(74) Vertreter: Grünecker Patent- und Rechtsanwälte PartG mbB

(56) Entgegenhaltungen:
- DE-U1-202012 012 720
- DE-U1-202014 100 292
- JP-A- H11 189 192
- JP-A- 2015 147 510
- JP-B2- 5 872 973

## Beschreibung

Die vorliegende Erfindung betrifft eine Tretlageranordnung für ein pedalbetriebenes Fahrzeug nach dem Oberbegriff des unabhängigen Anspruchs 1.

Eine gattungsgemäße Tretlageranordnung umfasst eine Tretlagerwelle, die eine Achse der Tretlageranordnung definiert und zur Verbindung mit zwei Pedalen vorgesehen ist, ein erstes Radiallager sowie ein axial davon beabstandetes zweites Radiallager zur drehbaren Lagerung der Tretlagerwelle, und eine axial zumindest teilweise zwischen dem ersten Radiallager und dem zweiten Radiallager angeordnete und die Tretlagerwelle umschließende Messhülse zur Erfassung eines über die Pedale in die Tretlagerwelle eingeleiteten Drehmoments. Lediglich an einem ersten Ende der beiden axialen Enden der Messhülse besteht eine drehfeste Verbindung zwischen Tretlagerwelle und Messhülse. Die Tretlagerwelle ist über die beiden Radiallager an einem feststehenden Bauteil des pedalbetriebenen Fahrzeugs, insbesondere an dem Rahmen bzw. dem Tretlagergehäuse eines Fahrradrahmens, drehbar gelagert.

Das Drehmoment kann mittels eines feststehenden Sensors beispielsweise über die Verwindung der Messhülse bzw. über den magnetoelastischen Effekt detektiert werden. Für eine zuverlässige Erfassung des Drehmoments muss die Messhülse eine gewisse axiale Länge aufweisen, auf der sich das Drehmoment nicht ändert. Die Messhülse ist somit als freistehende Hülse ausgeführt. Eine Tretlageranordnung nach dem Oberbegriff des unabhängigen Anspruchs 1 ist beispielsweise aus WO 2013030089 A1 bekannt. Bei der aus dieser Druckschrift bekannten Tretlageranordnung nimmt die Messhülse, in axialer Richtung betrachtet, nahezu den gesamten Bauraum zwischen den beiden Radiallagern ein. Die gattungsgemäße Druckschrift JP 5 872973 B2 offenbart die Verwendung einer Magnetostriktions-Hülse auf der Kurbelwelle eines Fahrrads, um das auf die Kurbelwelle einwirkende Drehmoment zu erfassen, wobei der der Drehmomentsensor fest mit dem Gehäuse verbunden und drehfest in der Tretlageranordnung positioniert ist. Die weitere gattungsgemäße Druckschrift JP 2015 147510 A beschreibt einen zylindrischen Sensorkörper für eine solche Tretlageranordnung, um eine einfache Positionierung der Sensoreinheit an der Kurbelwelle zu ermöglichen. Die Druckschrift JP-H11 189192 A betrifft eine Messeinrichtung zur Erfassung der manuellen Antriebskraft für ein Fahrrad mit Hilfsantrieb, wobei eine Störung der Messung durch andere Antriebselemente verhindert werden soll.

Bei Fahrrädern mit elektrischem Hilfsantrieb in Form eines Mittelmotors findet die Drehmomenteinleitung des Hilfsantriebs ebenfalls am Tretlager statt. Die Drehmomenteinleitung erfolgt üblicherweise über ein Getriebe, welches axial an die Messhülse anschließend angeordnet ist. Tretlager und Tretlagerwelle sind daher im Vergleich zu Fahrrädern ohne Hilfsantrieb in der Regel breiter bzw. länger, was sich negativ auf den als Q-Faktor bekannten Pedalabstand und die ankle clearance auswirkt.

Aufgabe der vorliegenden Erfindung ist es, eine möglichst kompakte und axial kurz bauende Tretlageranordnung anzugeben, die weiterhin eine zuverlässige Erfassung des über die Pedale in die Tretlagerwelle eingeleiteten Drehmoments erlaubt.

Die Aufgabe wird gelöst durch die Merkmale des unabhängigen Anspruchs 1, wobei sich die Messhülse in axialer Richtung bis hin zu einer Position zwischen erstem Radiallager und Tretlagerwelle erstreckt, sodass das zumindest ein Abschnitt der Messhülse zwischen dem ersten Radiallager und der Tretlagerwelle angeordnet ist. Über das erste Radiallager wird somit streng genommen die Messhülse drehbar gelagert, wobei die Tretlagerwelle drehfest mit der Messhülse verbunden und damit indirekt ebenfalls über das erste Radiallager drehbar gelagert ist.

Durch die erfindungsgemäße Lösung wird eine besonders kompakte Bauweise erreicht, wobei weiterhin eine zuverlässige und präzise Erfassung des über die Pedale in die Tretlagerwelle eingeleiteten Drehmoments ermöglicht wird, welches der Benutzer des pedalgetriebenen Fahrzeugs mit Muskelkraft erzeugt.

Bei dem pedalbetriebenen Fahrzeug handelt es sich vorzugsweise um ein Fahrrad. Weiter vorzugsweise handelt es sich bei dem Fahrzeug um ein pedalbetriebenes Fahrzeug mit elektrischem Hilfsantrieb, insbesondere um ein Pedelec oder s-Pedelec. Die Erfindung eignet sich besonders für Fahrräder, deren elektrischer Antrieb als Mittelmotor ausgeführt ist.

Die Messhülse erstreckt sich vorzugsweise bis hin zu einem, dem zweiten Radiallager abgewandten Ende des ersten Radiallagers. Dadurch ergibt sich eine besonders kompakte Bauweise, wobei gleichzeitig eine besonders stabile drehfeste Verbindung zwischen Messhülse und Tretlagerwelle erreicht werden kann. Weiter vorzugsweise schließen erstes Radiallager und Messhülse an demjenigen Ende, welches dem zweiten Radiallager abgewandt ist, miteinander ab. Bei dieser Ausführungsform ergibt sich ein besonders aufgeräumtes und schmutzunanfälliges Design.

Bei dem ersten Radiallager handelt es sich vorzugsweise um das in Fahrtrichtung gesehene linke Lager der Tretlagerwelle, das zweite Radiallager befindet sich vorzugsweise auf der Kettenblattseitigen rechten Seite.

Weitere vorteilhafte Ausführungsformen der vorliegenden Erfindung sind Gegenstand der Unteransprüche.

Gemäß einer besonders bevorzugten Ausführungsform der vorliegenden Erfindung ist die drehfeste Verbindung zwischen Tretlagerwelle und Messhülse an axialer Position des ersten Radiallagers realisiert. Dadurch kann das Drehmoment von der Tretlagerwelle auf die Messhülse übertragen werden. Eine Übertragung des Drehmoments an axialer Position des ersten Radiallagers ermöglicht eine kompakte Bauweise der Tretlageranordnung.

Gemäß einer weiteren bevorzugten Ausführungsform der vorliegenden Erfindung ist das erste Ende der Messhülse zwischen dem ersten Radiallager und der Tretlagerwelle angeordnet. Dadurch kann die Bauweise der Tretlageranordnung kompakt gehalten werden und die Übertragung des Drehmoments von der Tretlagerwelle auf die Messhülse erfolgt optimal.

Gemäß einer alternativen Ausführungsform der vorliegenden Erfindung ist an axialer Position des ersten Radiallagers keine drehfeste Verbindung zwischen Tretlagerwelle und Messhülse realisiert. Die Verbindung zwischen Tretlagerwelle und Messhülse an axialer Position des ersten Radiallagers kann bspw. auch lediglich der koaxialen Ausrichtung der Rotationsachse der Messhülse zu der Achse der Tretlagerwelle dienen. Die Rotationsachse der Messhülse und die Rotationsachse des Tretlagers sollen möglichst exakt übereinander liegen um das Drehmoment an der Messhülse exakt messen zu können. Die drehfeste Verbindung zwischen Tretlagerwelle und Messhülse kann bei dieser Ausführungsform beispielsweise axial vor dem ersten Radiallager, also auf der dem zweiten Radiallager abgewandten Seite, realisiert sein. Alternativ ist es auch denkbar, jeweils kurz oder unmittelbar vor und nach dem ersten Radiallager eine drehfeste Verbindung zwischen Tretlagerwelle und Messhülse zu realisieren.

Gemäß der vorliegenden Erfindung ist die drehfeste Verbindung zwischen Tretlagerwelle und Messhülse durch den Eingriff zumindest eines ersten Formschlusselements der Messhülse mit zumindest einem zweiten Formschlusselement der Tretlagerwelle realisiert. Dadurch wird eine besonders einfache, kompakte, robuste sowie kostengünstig umsetzbare Bauweise erreicht.

Erfindungsgemäß handelt es sich bei dem zweiten Formschlusselement der Tretlagerwelle um dasselbe Formschlusselement, welches zur Herstellung einer drehfesten Verbindung zwischen Pedal und Tretlagerwelle dient. Dadurch ergibt sich eine besonders einfache und kostengünstige Fertigung der Tretlagerwelle. Ferner gestaltet sich dadurch auch die Montage besonders einfach.

Gemäß einer weiteren besonders bevorzugten Ausführungsform ist das zweite Formschlusselement der Tretlagerwelle als Verzahnung ausgeführt ist. Alternativ wäre im Prinzip auch eine einfache Nut-Feder-Verbindung denkbar. Auch die ehemals gängige Vierkant-Ausführung der Tretlagerwelle könnte bei entsprechender Verlängerung des Vierkants theoretisch zur Herstellung der drehfesten Verbindung zwischen Tretlagerwelle und Messhülse verwendet werden. Vorzugsweise weist die Tretlagerwelle eine Außenverzahnung auf, in die eine entsprechende Innenverzahnung der Messhülse eingreift. Dadurch wird eine besonders sichere Verbindung geschaffen.

Ganz besonders bevorzugt ist die Verzahnung der Tretlagerwelle als Keilverzahnung nach dem ISIS-Standard (International Spline Interface Standard) ausgeführt. Dadurch ist eine Kompatibilität mit aktuell gängigen Komponenten gewährleistet. Es können insbesondere aktuell verfügbare Pedale mit entsprechender Aufnahme nach dem ISIS-Standard verwendet werden. Die Verzahnung ist im Vergleich zu einer herkömmlichen Ausführung in axialer Richtung betrachtet bis zu einer Position innerhalb des Radiallagers verlängert.

Gemäß einem nicht beanspruchten Beispiel ist die drehfeste Verbindung zwischen Tretlagerwelle und Messhülse durch eine Schweißverbindung realisiert.

Gemäß einer weiteren bevorzugten Ausführungsform der vorliegenden Erfindung weist die Tretlageranordnung zwischen Messhülse und zweitem Radiallager ein Element zur Einleitung eines Hilfsdrehmoments auf, welches von einem elektrischen Hilfsantrieb des pedalbetriebenen Fahrzeugs bereitgestellt wird. Hierbei kann es sich um eine Verlängerung der Messhülse oder um ein separates an die Messhülse axial anschließendes und drehfest mit der Messhülse verbundenes Element handeln.

Gemäß einer weiteren bevorzugten Ausführungsform der vorliegenden Erfindung ist das erste Radiallager als Wälzlager ausgeführt, wobei eine innere Lagerschale des ersten Radiallagers radial auf der Messhülse angeordnet ist. Vorzugsweise ist das zweite Radiallager ebenfalls als Wälzlager ausgeführt. Weiter vorzugsweise handelt es sich bei beiden Radiallagern um Kugellager.

Die Erfindung stellt auch ein pedalbetriebenes Fahrzeug bereit, welches eine erfindungsgemäße Tretlageranordnung, insbesondere nach einer der oben beschriebenen Ausführungsformen, aufweist.

Vorzugsweise handelt es sich bei dem pedalbetriebenen Fahrzeug um ein Fahrrad mit elektrischem Hilfsantrieb. Weiter vorzugsweise ist der Hilfsantrieb als Mittelmotor ausgeführt.

Ein Ausführungsbeispiel der vorliegenden Erfindung wird im Folgenden anhand von Zeichnungen näher erläutert.

Es zeigen:
- Figur 1:: einen Längsschnitt durch eine erfindungsgemäße Tretlageranordnung, und
- Figur 2:: eine längsgeschnittene Detailansicht der erfindungsgemäßen Tretlageranordnung aus Figur 1 in einer perspektivischen Ansicht.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

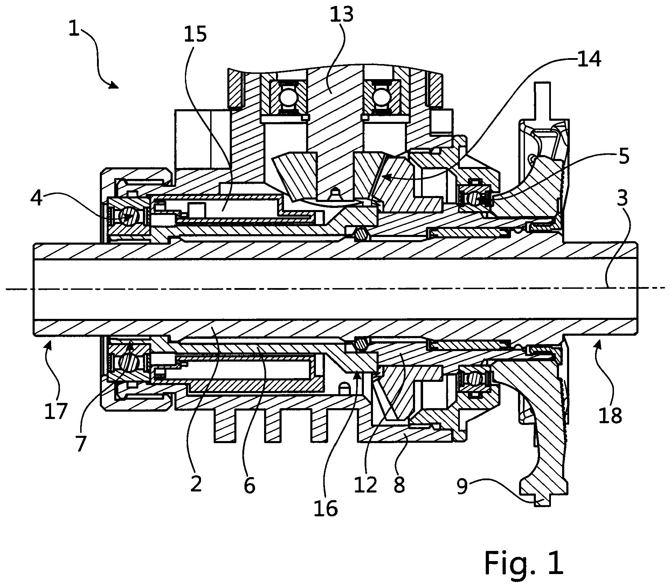

Figur 1 zeigt einen Längsschnitt durch eine erfindungsgemäße Tretlageranordnung 1. Die Schnittebene geht durch die geometrische Achse 3 der Tretlagerwelle 2. Die Tretlagerwelle 2 ist in an sich bekannter Weise mittels eines ersten Radiallagers 4 auf der in Fahrtrichtung betrachtet linken Seite und eines axial davon beanstandeten zweiten Radiallagers 5 auf der in Fahrtrichtung betrachtet rechten Seite drehbar im Tretlagergehäuse 8 eines nicht weiter dargestellten Fahrradrahmens eines Pedelec gelagert. Beide Lager 4 und 5 sind jeweils als Kugellager ausgeführt. In der Darstellung ist ferner zu erkennen, dass sich auf der in Fahrtrichtung betrachtet rechten Seite das Kettenblatt bzw. der Kettenblattträger 9 befindet, welcher wiederum schwimmend auf der Tretlagerwelle gelagert ist.

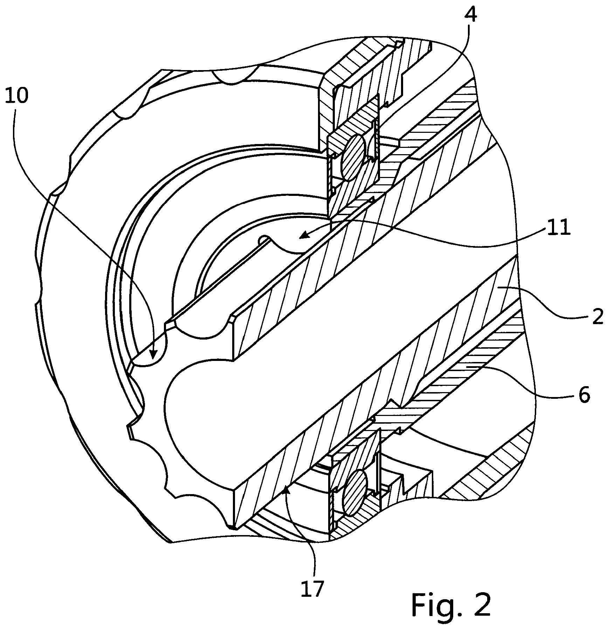

Die Tretlagerwelle 2 ist als Hohlwelle ausgeführt und weist sowohl am linken Ende 17 als auch am rechten Ende 18 entsprechende Aufnahmen zur Befestigung der beiden ebenfalls nicht dargestellten Pedale des Fahrrads auf. Figur 2 zeigt, dass diese Aufnahmen zur Befestigung der Pedale bei dem gezeigten Ausführungsbeispiel als Außenverzahnung 10 ausgeführt sind. Es handelt sich hierbei um eine mittlerweile gebräuchliche Keilverzahnung gemäß ISIS-Standard.

Das Pedelec verfügt über einen elektrischen Hilfsantrieb in Form eines Mittelmotors. Die Motorwelle 13 des Motors verläuft orthogonal zur Tretlagerwelle 2. Das Motordrehmoment wird über ein Getriebe 14 und eine entsprechende Drehmomenteinleitungshülse 12 auf das Kettenblatt übertragen. Zur Übertragung des Drehmoments, das vom Benutzer des Fahrrads mit Muskelkraft erzeugt wird, ist der Kettenblattträger 9 selbstverständlich auch drehfest mit der Tretlagerwelle 2 verbunden. Ein Bindeglied stellt dabei die in der linken Bildhälfte dargestellte Messhülse 6 dar. Die Messhülse 6 ist koaxial zur Tretlagerwelle 2 angeordnet und umschließt diese in dem Bereich zwischen dem linken Radiallager 4 und der Drehmomenteinleitungshülse 12. Die Messhülse 6 ist freistehend ausgeführt und lediglich an ihrem linken Ende 7 drehfest mit der Tretlagerwelle 2 verbunden. Die drehfeste Verbindung ist an der axialen Position des ersten Radiallagers 4 realisiert. Die Messhülse 6 erstreckt sich dazu in axialer Richtung bis hin zu einer Position zwischen dem ersten Radiallager 4 und der Tretlagerwelle 2, sodass das erste Ende 7 der Messhülse 6 zwischen dem ersten Radiallager 4 und der Tretlagerwelle 2 angeordnet ist. Alternativ kann auch lediglich ein Abschnitt der Messhülse 6 zwischen dem ersten Radiallager 4 und der Tretlagerwelle 2 angeordnet sein. Wie Figur 2 zeigt, verfügt die Messhülse 6 am linken Ende über eine Innenverzahnung 11, die in die Außenverzahnung 10 der Tretlagerwelle 2 eingreift, welche hierfür bis unter das Radiallager 4 verlängert ist. Die Messhülse ist an ihrem rechten Ende 16 mit der Drehmomenteinleitungshülse 12 verbunden. Die sich proportional zum Drehmoment verhaltende Torsion bzw. Torsionsspannung der Messhülse wird über einen feststehenden Sensor 15 erfasst.

Durch die Realisierung der drehfesten Verbindung zwischen Messhülse und Tretlagerwelle direkt unter dem linken Radiallager wird eine kompakte Bauweise erreicht, sodass die Tretlagerwelle die gleiche oder eine ähnliche Länge aufweisen kann, wie die Tretlagerwelle eines Fahrrads ohne elektrischen Hilfsantrieb. Fahrgefühl und Q-Faktor werden somit nicht negativ beeinflusst.

### Bezugszeichenliste

- 1.: Tretlageranordnung
- 2.: Tretlagerwelle
- 3.: Achse
- 4.: Erstes Radiallager
- 5.: Zweites Radiallager
- 6.: Messhülse
- 7.: Erstes Ende der Messhülse
- 8.: Tretlagergehäuse
- 9.: Kettenblatt
- 10.: Verzahnung der Tretlagerwelle
- 11.: Verzahnung der Messhülse
- 12.: Drehmomenteinleitungshülse
- 13.: Motorwelle
- 14.: Getriebe
- 15.: Sensor
- 16.: Zweites Ende der Messhülse
- 17.: Linkes Ende der Tretlagerwelle
- 18.: Rechtes Ende der Tretlagerwelle

## Patentansprüche

1. Tretlageranordnung (1) für ein pedalbetriebenes Fahrzeug, mit einer Tretlagerwelle (2), die eine Achse (3) der Tretlageranordnung (1) definiert und zur Verbindung mit zwei Pedalen vorgesehen ist, einem ersten Radiallager (4) sowie einem axial davon beabstandeten zweiten Radiallager (5) zur drehbaren Lagerung der Tretlagerwelle, und einer axial zumindest teilweise zwischen dem ersten Radiallager und dem zweiten Radiallager angeordneten und die Tretlagerwelle umschließenden Messhülse (6) zur Erfassung eines über die Pedale in die Tretlagerwelle eingeleiteten Drehmoments, wobei lediglich an einem ersten Ende (7) der beiden axialen Enden der Messhülse eine drehfeste Verbindung zwischen Tretlagerwelle (2) und Messhülse (6) besteht, wobei sich die Messhülse (6) in axialer Richtung bis hin zu einer Position zwischen erstem Radiallager (4) und Tretlagerwelle (2) erstreckt, so dass zumindest ein Abschnitt (7) der Messhülse (6) zwischen dem ersten Radiallager (4) und der Tretlagerwelle (2) angeordnet ist, **dadurch gekennzeichnet, dass** die drehfeste Verbindung zwischen Tretlagerwelle (2) und Messhülse (6) durch den Eingriff zumindest eines ersten Formschlusselements der Messhülse (6) mit zumindest einem zweiten Formschlusselement der Tretlagerwelle (2) realisiert ist, wobei es sich bei dem zweiten Formschlusselement der Tretlagerwelle (2) um dasselbe Formschlusselement handelt, welches zur Herstellung einer drehfesten Verbindung zwischen Pedal und Tretlagerwelle (2) dient.

2. Tretlageranordnung (1) nach Anspruch 1, **dadurch gekennzeichnet, dass** das zweite Formschlusselement der Tretlagerwelle (2) als Verzahnung (10) ausgeführt ist.

3. Tretlageranordnung (1) nach Anspruch 2, **dadurch gekennzeichnet, dass** die Verzahnung (10) als Keilverzahnung nach dem ISIS-Standard ausgeführt wird.

4. Tretlageranordnung (1) nach einem der Ansprüche 1 bis 3, **dadurch gekennzeichnet, dass** die drehfeste Verbindung zwischen Tretlagerwelle (2) und Messhülse (6) an axialer Position des ersten Radiallagers (4) realisiert ist.

5. Tretlageranordnung (1) nach einem der Ansprüche 1 bis 4, **dadurch gekennzeichnet, dass** das erste Ende (7) der Messhülse (6) zwischen dem ersten Radiallager (4) und der Tretlagerwelle (2) angeordnet ist.

6. Tretlageranordnung (1) nach einem der Ansprüche 1 bis 3, **dadurch gekennzeichnet, dass** keine drehfeste Verbindung zwischen Tretlagerwelle (2) und Messhülse (6) an axialer Position des ersten Radiallagers (4) realisiert ist.

7. Tretlageranordnung (1) nach einem der Ansprüche 1 bis 6, **dadurch gekennzeichnet, dass** die Tretlageranordnung (1) zwischen Messhülse (6) und zweitem Radiallager (5) ein Element (12) zur Einleitung eines von einem elektrischen Hilfsantrieb des pedalbetriebenen Fahrzeugs bereitgestellten Hilfsdrehmoments aufweist.

8. Tretlageranordnung (1) nach einem der Ansprüche 1 bis 7, **dadurch gekennzeichnet, dass** das erste Radiallager (4) als Wälzlager ausgeführt ist, wobei eine innere Lagerschale des ersten Radiallagers (4) radial auf der Messhülse (6) angeordnet ist.

9. Pedalbetriebenes Fahrzeug, **dadurch gekennzeichnet, dass** das pedalbetriebene Fahrzeug eine Tretlageranordnung (1) nach einem der Ansprüche 1 bis 8 aufweist.

10. Pedalbetriebenes Fahrzeug nach Anspruch 9, **dadurch gekennzeichnet, dass** es sich bei dem pedalbetriebenen Fahrzeug um ein Fahrrad mit elektrischem Hilfsantrieb handelt.

11. Pedalbetriebenes Fahrzeug nach Anspruch 10, **dadurch gekennzeichnet, dass** der Hilfsantrieb als Mittelmotor ausgeführt ist.

## Claims

1. Bottom bracket bearing arrangement (1) for a pedal-powered vehicle, comprising a bottom bracket bearing shaft (2) defining an axis (3) of the bottom bracket bearing arrangement (1) and provided for connection to two pedals, a first radial bearing (4) as well as a second radial bearing (5) axially spaced therefrom for rotatably supporting the bottom bracket bearing shaft, and a measuring sleeve (6), which is arranged axially at least partially between the first radial bearing and the second radial bearing and encloses the bottom bracket bearing shaft, for detecting a torque introduced into the bottom bracket bearing shaft via the pedals, wherein a rotationally fixed connection between the bottom bracket bearing shaft (2) and the measuring sleeve (6) exists only at a first end (7) of the two axial ends of the measuring sleeve, and wherein the measuring sleeve (6) extending in the axial direction as far as a position between the first radial bearing (4) and the bottom bracket bearing shaft (2), so that at least one section (7) of the measuring sleeve (6) is arranged between the first radial bearing (4) and the bottom bracket bearing shaft (2), **characterized in that** the rotationally fixed connection between the pedal bearing shaft (2) and the measuring sleeve (6) is realized by the engagement of at least one first positive-locking element of the measuring sleeve (6) with at least one second positive-locking element of the pedal bearing shaft (2), wherein the second positive-locking element of the pedal bearing shaft (2) being the same positive-locking element which is used to produce a rotationally fixed connection between the pedal and the pedal bearing shaft (2).

2. Bottom bracket bearing arrangement (1) according to claim 1, **characterized in that** the second positive-locking element of the pedal bearing shaft (2) is designed as toothing (10).

3. Bottom bracket bearing arrangement (1) according to claim 2, **characterized in that** the gearing (10) is designed as splines according to the ISIS standard.

4. Bottom bracket bearing arrangement (1) according to one of claims 1 to 3, **characterized in that** the rotationally fixed connection between the pedal bearing shaft (2) and the measuring sleeve (6) is implemented at the axial position of the first radial bearing (4).

5. Bottom bracket bearing arrangement (1) according to one of claims 1 to 4, **characterized in that** the first end (7) of the measuring sleeve (6) is arranged between the first radial bearing (4) and the bottom bracket bearing shaft (2).

6. Bottom bracket bearing arrangement (1) according to one of claims 1 to 3, **characterized in that** at the axial position of the first radial bearing (4) no rotationally fixed connection is implemented between the bottom bracket bearing shaft (2) and the measuring sleeve (6).

7. Bottom bracket bearing arrangement (1) according to one of claims 1 to 6, **characterized in that** between measuring sleeve (6) and second radial bearing (5) the bottom bracket bearing arrangement (1) has an element (12) for introducing an auxiliary torque provided by an electric auxiliary drive of the pedal-powered vehicle.

8. Bottom bracket bearing arrangement (1) according to any one of claims 1 to 7, **characterized in that** the first radial bearing (4) is designed as a roller bearing, wherein an inner bearing shell of the first radial bearing (4) is arranged radially on the measuring sleeve (6).

9. Pedal-powered vehicle, **characterized in that** the pedal-powered vehicle has a pedal bearing arrangement (1) according to one of claims 1 to 8.

10. Pedal-powered vehicle according to claim 9, **characterized in that** the pedal-powered vehicle is a bicycle with electric auxiliary drive.

11. Pedal-powered vehicle according to claim 10, **characterized in that** the auxiliary drive is designed as a central motor.

## Revendications

1. Agencement de pédalier (1) pour véhicule à pédales, comprenant un arbre de pédalier (2) définissant un axe (3) de l'agencement de pédalier (1) et destiné à être relié à deux pédales, un premier palier radial (4) et un second palier radial (5), espacé axialement par rapport audit premier palier radial, destinés à accueillir en rotation l'arbre de pédalier, et une bague de mesure (6) agencée de manière axiale au moins partiellement entre le premier palier radial et le second palier radial, entourant l'arbre de pédalier et destinée à détecter un couple introduit par les pédales dans l'arbre de pédalier, dans lequel une liaison solidaire en rotation entre l'arbre de pédalier (2) et la bague de mesure (6) n'est constituée qu'au niveau d'une première extrémité (7) parmi les deux extrémités axiales de la bague de mesure, dans lequel la bague de mesure (6) s'étend dans la direction axiale jusqu'à une position située entre le premier palier radial (4) et l'arbre de pédalier (2), de sorte qu'au moins une section (7) de la bague de mesure (6) est agencée entre le premier palier radial (4) et l'arbre de pédalier (2), **caractérisé en ce que** la liaison solidaire en rotation entre l'arbre de pédalier (2) et la bague de mesure (6) est réalisée grâce à la mise en prise d'au moins un premier élément à verrouillage par complémentarité de forme de la bague de mesure (6) avec au moins un second élément à verrouillage par complémentarité de forme de l'arbre de pédalier (2), dans lequel le second élément à verrouillage par complémentarité de forme de l'arbre de pédalier (2) est le même élément à verrouillage par complémentarité de forme qui sert à produire une liaison solidaire en rotation entre la pédale et l'arbre de pédalier (2).

2. Agencement de pédalier (1) selon la revendication 1, **caractérisé en ce que** le second élément à verrouillage par complémentarité de forme de l'arbre de pédalier (2) est réalisé sous la forme d'une denture (10).

3. Agencement de pédalier (1) selon la revendication 2, **caractérisé en ce que** la denture (10) est réalisée sous la forme d'une denture cannelée selon la norme ISIS.

4. Agencement de pédalier (1) selon l'une quelconque des revendications 1 à 3, **caractérisé en ce que** la liaison solidaire en rotation entre l'arbre de pédalier (2) et la bague de mesure (6) est réalisée au niveau d'une position axiale du premier palier radial (4).

5. Agencement de pédalier (1) selon l'une quelconque des revendications 1 à 4, **caractérisé en ce que** la première extrémité (7) de la bague de mesure (6) est agencée entre le premier palier radial (4) et l'arbre de pédalier (2).

6. Agencement de pédalier (1) selon l'une quelconque des revendications 1 à 3, **caractérisé en ce qu'**aucune liaison solidaire en rotation entre l'arbre de pédalier (2) et la bague de mesure (6) n'est réalisée au niveau d'une position axiale du premier palier radial (4).

7. Agencement de pédalier (1) selon l'une quelconque des revendications 1 à 6, **caractérisé en ce que** l'agencement de pédalier (1) présente, entre la bague de mesure (6) et le second palier radial (5), un élément (12) destiné à introduire un couple auxiliaire fourni par un entraînement électrique auxiliaire du véhicule à pédales.

8. Agencement de pédalier (1) selon l'une quelconque des revendications 1 à 7, **caractérisé en ce que** le premier palier radial (4) est réalisé sous la forme d'un palier à roulement, dans lequel une coque de palier intérieure du premier palier radial (4) est agencée de manière radiale sur la bague de mesure (6).

9. Véhicule à pédales, **caractérisé en ce que** le véhicule à pédales présente un agencement de pédalier (1) selon l'une quelconque des revendications 1 à 8.

10. Véhicule à pédales selon la revendication 9, **caractérisé en ce que** le véhicule à pédales est une bicyclette à entraînement électrique auxiliaire.

11. Véhicule à pédales selon la revendication 10, **caractérisé en ce que** l'entraînement auxiliaire est réalisé sous la forme d'un moteur central.
